# EUROPÄISCHE PATENTSCHRIFT

(11) **EP 3 348 885 B1**
(45) Veröffentlichungstag und Bekanntmachung des Hinweises auf die Patenterteilung: **11.12.2019**
(21) Anmeldenummer: 17151657.8
(22) Anmeldetag: 16.01.2017
(51) Int. Cl.: B23P 15/00, F16J 15/12, F16K 3/18, F16K 5/02, F16K 3/30, F16K 25/00, F16K 51/02, F16J 15/10, F16K 3/02

(54) **DICHTUNG EINES VAKUUMVENTILS UND DIESBEZÜGLICHES HERSTELLUNGSVERFAHREN**
SEAL OF A VACUUM VALVE AND METHOD OF MANUFACTURING THE SEAL
JOINT D'ÉTANCHÉITÉ D'UNE VALVE DE CONTRÔLE DE VIDE ET SON PROCÉDÉ DE PRODUCTION

(43) Veröffentlichungstag der Anmeldung: 18.07.2018
(73) Patentinhaber: VAT Holding AG, 9469 Haag (CH)
(72) Erfinder: FRANK, Brian, CH-9000 St. Gallen (CH); SANDECK, Marco, CH-9470 Buchs SG (CH); MODER, Michael, A-6800 Feldkirch (AT); BESTEBNER, Jürgen, A-6842 Koblach (AT)
(74) Vertreter: Kaminski Harmann

(56) Entgegenhaltungen:
- EP-A1- 2 985 497
- US-A1- 2006 273 277
- US-A1- 2008 274 336
- US-A1- 2009 026 717
- US-A1- 2009 045 371
- US-A1- 2014 175 310

## Beschreibung

Die Erfindung betrifft ein Vakuumventil und ein Verschlusselement für ein Vakuumventil nach den Oberbegriffen der Ansprüche 1 und 11 sowie ein Verfahren zur Herstellung einer Dichtfläche eines solchen Vakuumventils nach Anspruch 12.

Allgemein sind Vakuumventile zum im Wesentlichen gasdichten Schliessen oder Regeln eines Fliesswegs, der durch eine in einem Ventilgehäuse ausgeformte Öffnung führt, in unterschiedlichen Ausführungsformen aus dem Stand der Technik bekannt. Vakuumschieberventile kommen insbesondere im Bereich der IC- und Halbleiterfertigung, die in einer geschützten Atmosphäre möglichst ohne das Vorhandensein verunreinigender Partikel stattfinden muss, zum Einsatz. Beispielsweise durchlaufen in einer Fertigungsanlage für Halbleiter-Wafer oder Flüssigkristall-Substrate die hochsensiblen Halbleiter- oder Flüssigkristall-Elemente sequentiell mehrere Prozesskammern, in denen die innerhalb der Prozesskammer befindlichen Halbleiterelemente mittels jeweils einer Bearbeitungsvorrichtung bearbeitet werden. Sowohl während des Bearbeitungsprozesses innerhalb der Prozesskammer, als auch während des Transports von Prozesskammer zu Prozesskammer müssen sich die hochsensiblen Halbleiterelemente stets in geschützter Atmosphäre - insbesondere im Vakuum - befinden. Die Prozesskammern sind beispielsweise über Verbindungsgänge miteinander verbunden, wobei die Prozesskammern mittels Vakuumschieberventile zum Transfer der Teile von der einen zur nächsten Prozesskammer geöffnet und im Anschluss zur Durchführung des jeweiligen Fertigungsschritts gasdicht verschlossen werden können. Derartige Ventile werden aufgrund des beschriebenen Anwendungsgebiets auch als Vakuum-Transferventile und aufgrund ihres rechteckigen Öffnungsquerschnitts auch als Rechteckschieber bezeichnet.

Da Transferventile unter anderem bei der Herstellung hochsensibler Halbleiterelemente zum Einsatz kommen, muss die insbesondere durch die Betätigung des Ventils verursachte Partikelgenerierung und die Anzahl der freien Partikel im Ventilraum möglichst gering gehalten werden. Die Partikelgenerierung ist primär eine Folge von Reibung beispielsweise durch Metall-Metall-Kontakt und durch Abrasion.

Die Abdichtung kann z.B. entweder über eine auf der Verschlussseite des Verschlusstellers angeordnete Dichtung, die auf den die Öffnung umlaufenden Ventilsitz gepresst wird, erfolgen, oder über einen Dichtungsring auf dem Ventilsitz, gegen den die Verschlussseite des Verschlusstellers gedrückt wird. Unterschiedliche Dichtvorrichtungen sind aus dem Stand der Technik bekannt, beispielsweise aus der US 6,629,682 B2 (Duelli). Ein geeignetes Material für Dichtungsringe ist beispielsweise das unter dem Handelsnamen Viton® bekannte elastische Dichtungsmaterial.

Die Anforderungen an die bei Vakuumventilen zum Einsatz kommenden Dichtungen sind sehr hoch. Einerseits muss im geschlossenen Zustand des Ventils die Dichtigkeit des Ventils gewährleistet sein. Dies ist vor allem aufgrund der im Vakuumbereich hohen Differenzdrücke und der somit auftretenden grossen Kräfte, die auf den Ventilverschluss wirken, eine grosse Herausforderung. Da die zum Einsatz kommenden Dichtungen bei übermässig hohen Verpressungen einem überdurchschnittlichen hohen Verschleiss unterliegen oder zerstört werden, muss der Aufbau des Ventils derart sein, dass die Differenzdruckkräfte nicht oder nur begrenzt auf die Dichtungen wirken können. Die Verpressung der Dichtung sollte entlang ihres Verlaufs möglichst gleichmässig erfolgen, was eine gleichmässige Anpresskraft des Ventiltellers auf den Ventilsitz im gesamten Berührungsbereich erfordert. Vor allem sind Querbelastungen und Längsbelastungen auf die Dichtung möglichst gering zu halten. Bei Querbelastungen quer zu der Längsrichtung der Dichtung besteht bei O-Ring-Dichtungen die Gefahr, dass sie aus ihrer Halterung, insbesondere der Nut, in welcher sie fixiert sind, gerissen werden. Auch aufvulkanisierte Dichtungen dürfen nur sehr begrenzten Querkräften ausgesetzt werden. Sowohl im geöffneten als auch geschlossenen Zustand des Ventils sind die Dichtungen zum Teil aggressiven Medien ausgesetzt und müssen daher entweder derart beschaffen sein, dass sie den Einflüssen standhalten können, und/oder aus dem Fliessweg des Mediums, auch zur Vermeidung von Abrasion, herausbewegt werden. Ein übermässig hoher Verschleiss der Dichtung stellt einen Unsicherheitsfaktor für die Prozesssicherheit dar und erfordert einen regelmässigen Austausch der Dichtung, was wiederum zu erhöhten Stillstandszeiten im Prozess führt. Unterschiedliche Ausführungsformen von Vakuumventilen, insbesondere deren Dichtungs- und Antriebstechnologien, sind aus dem Stand der Technik bekannt, welche unter anderem als Ziel die Erhöhung der Lebensdauer der eingesetzten Dichtungen sowie eine verbesserte Prozesssicherheit haben. Beispiele solcher Ausführungsformen von Vakuumventilen werden in US 2014/0175310 A1 und EP 2,985,497 A1 beschrieben.

Abhängig von den jeweiligen Antriebstechnologien wird insbesondere zwischen Schieberventilen, auch Ventilschieber oder Rechteckschieber genannt, und Pendelventilen unterschieden, wobei das Schliessen und Öffnen im Stand der Technik meistens in zwei Schritten erfolgt. In einem ersten Schritt wird ein Ventilverschlussglied, insbesondere ein Verschlussteller oder ein Verschlusselement, im Falle eines Schieberventils, wie beispielsweise aus der US 6,416,037 (Geiser) oder der US 6,056,266 (Blecha) bekannt, insbesondere des L-Typs, linear über eine Öffnung im Wesentlichen parallel zum Ventilsitz verschoben oder im Falle eines Pendelventils, wie beispielsweise aus der US 6,089,537 (Olmsted) bekannt, um eine Schwenkachse über die Öffnung geschwenkt, ohne dass hierbei eine Berührung zwischen dem Verschlussteller und dem Ventilsitz des Ventilgehäuses stattfindet. In einem zweiten Schritt wird der Verschlussteller mit dessen Verschlussseite auf den Ventilsitz des Ventilgehäuses gedrückt, so dass die Öffnung gasdicht verschlossen wird. Die Abdichtung kann z.B. entweder über eine auf der Verschlussseite des Verschlusstellers angeordnete Dichtung, die auf den die Öffnung umlaufenden Ventilsitz gepresst wird, erfolgen, oder über einen Dichtungsring auf dem Ventilsitz, gegen den die Verschlussseite des Verschlusstellers gedrückt wird. Die Dichtung insbesondere der Dichtungsring, kann in einer Nut gehalten und/oder aufvulkanisiert sein.

Die beschriebene zweistufige Bewegung, bei welcher das Verschlussglied zuerst quer über die Öffnung geschoben wird, ohne dass es zu einer Berührung der Dichtung mit dem Ventilsitz kommt, und das Verschlussglied im Anschluss im Wesentlichen senkrecht auf den Ventilsitz gedrückt wird, hat neben der Möglichkeit einer präzisen Regelung des Durchflusses vor allem den Vorteil, dass die Dichtung nahezu ausschliesslich senkrecht verpresst wird, ohne dass es zu einer Quer- oder Längsbelastung der Dichtung kommt. Der Antrieb weist einen verhältnismässig komplexe Aufbau auf, der insbesondere entweder von einem einzigen Antrieb, der eine L-förmige Bewegung des Verschlussglieds ermöglicht, oder von einer Mehrzahl an Antrieben, beispielsweise zwei Linearantrieben oder einem Linear- und einem Spreizantrieb, gebildet wird. Spreizantriebe, welche meist unmittelbar hinter dem Verschlussteller angeordnet sind und diesen relativ zu dem Schaft, auf welchem sie sich befinden, in senkrechter Richtung auf den Ventilsitz verstellen, weisen eine Vielzahl an mechanischen Teilen, welche zueinander Relativbewegungen ausführen, im Ventilinneren auf.

Keilventile, die lediglich linear verstellt werden, ermöglichen eine deutlich höhere Verstellgeschwindigkeit, sie eignen sich jedoch aufgrund der Querbeanspruchung der Dichtung zum Teil kaum für den Vakuumbereich, und wenn doch, dann für nur wenige Verstellzyklen.

Dieses Problem wird mittels Schieberventilen gelöst, bei welchen der Schliess- und Dichtvorgang zwar über eine einzige lineare Bewegung erfolgt, jedoch die Dichtgeometrie derart ist, dass eine Querbeanspruchung der Dichtung gänzlich vermieden wird. Ein solches Ventil ist beispielsweise das unter der Produktbezeichnung "MONOVAT Reihe 02 und 03" bekannte und als Rechteckinsertventil ausgestaltete Transferventil der Firma VAT Vakuumventile AG in Haag, Schweiz. Der Aufbau und die Funktionsweise eines solchen Ventils werden beispielsweise in der US 4,809,950 (Geiser) und der US 4,881,717 (Geiser) beschrieben.

Das dort beschriebene Ventil besitzt in seinem Gehäuse eine Dichtfläche, die, in Richtung der Achse der Ventildurchgangsöffnung gesehen, hintereinander liegende Abschnitte besitzt, die in seitlich nach aussen verlaufende, ebene Dichtflächenabschnitte über stetig verlaufende Krümmungen übergehen, wobei die gedachten Erzeugenden dieser einteiligen, aber mehrere Abschnitte aufweisenden Dichtfläche parallel zur Achse der Ventildurchgangsöffnung liegen. Die Dichtfläche ist bearbeitet. Das Verschlussglied besitzt eine dazu korrespondierende Auflagefläche für die umfangsgeschlossene Dichtung. Detaillierter beschrieben besitzt der so genannte Ventilschieber ein Schiebergehäuse und eine Schieberdurchgangsöffnung, die mit einem in seiner Ebene verschiebbaren Verschlussglied verschliessbar ist. Im Bereich der Schieberdurchgangsöffnung ist eine Dichtfläche vorgesehen, an der in der Schliessstellung des Verschlussgliedes eine an diesem angeordnete, umfangsgeschlossene Dichtung anliegt, wobei die gedachten, geraden Erzeugenden der Dichtfläche parallel zur Achse der Schieberdurchgangsöffnung liegen. Die umfangsgeschlossene, einstückige Dichtung weist Abschnitte unterschiedlicher Längen und/oder Formen auf, die in verschiedenen Ebenen liegen, wobei zwei Hauptabschnitte der umfangsgeschlossenen Dichtung in Ebenen liegen, welche zur Achse der Schieberdurchgangsöffnung rechtwinklig stehen und voneinander distanziert sind. Die beiden Hauptabschnitte der Dichtung sind durch Seitenabschnitte verbunden. Das Verschlussglied besitzt zum Verlauf der Dichtfläche des Gehäuses eine korrespondierend verlaufende, die umfangsgeschlossene Dichtung tragende Fläche. Die Seitenabschnitte der umfangsgeschlossenen Dichtung verlaufen U-förmig. Jeweils die Schenkel dieser U-förmig verlaufenden Seitenabschnitte liegen in einer Ebene. Die in Achsrichtung der Schieberdurchgangsöffnung gesehen hintereinander liegenden Abschnitte der Dichtfläche gehen für die Anlage der Hauptabschnitte der Dichtung in jenem Bereich, in dem sie eine gemeinsame, gerade, achsparallele Erzeugende besitzen, in seitlich nach aussen verlaufende ebene Dichtflächenabschnitte über. Diese ebenen Dichtflächenabschnitte liegen in zueinander und zur Achse der Schieberdurchgangsöffnung parallel liegenden Ebenen.

Ein geeigneter Antrieb für ein solches, mittels einer linearen Bewegung verschliessbares Transferventil ist in der JP 6241344 (Buriida Fuuberuto) dargestellt. Der dort beschriebene Antrieb besitzt exzentrisch gelagerte Hebel zum linearen Verschieben der Schubstangen, auf welchen das Verschlussglied montiert ist.

Im Wesentlichen unabhängig vom oben genannten Antriebstechnologien für Ventilverschlüsse sind die Ausführungen für auf dem Verschlusselement vorgesehene oder aufgebrachte Dichtungen. Wie oben erwähnt ist eine solche Dichtung typischerweise als O-Ring in einer Nut realisiert oder - für eine verbesserte Haltbarkeit - mittels eines speziellen Werkzeugs auf das Verschlusselement aufvulkanisiert.

Für das Vulkanisieren der Dichtung sind Überlaufspalte vorgesehen damit ein Überschuss an Dichtungsmaterial, z.B. Elastomer, abgeführt werden kann und die Dichtung entsprechend der durch das Werkzeug vorgegebene Form (Profil) erzeugt werden kann. Jedoch verbleibt das durch die Überlaufspalte ausgetretene Material an dem Plattenrohling, welcher beispielsweise aus Aluminium oder Edelstahl gefertigt ist, und muss im Anschluss an das Vulkanisieren mechanisch entfernt werden. Dieses Entfernen erfolgt heute zumeist mittels Trimmen im Bereich der Übergangszone Metall/Dichtmaterial und resultiert in einem Abtrag von sowohl Dichtmaterial als such Metall.

Ein grosser Nachteil bei diesem Prozess ist jedoch das Entstehen von Partikel und die Gratbildung beim Materialabtrag durch das Trimmen. Da eben diese Partikelbildung und das Zurückbleiben solcher Partikel auf dem Ventilverschlusselement für die im Vakuumbereich auszuführende Bearbeitungsprozesse extrem kritisch ist, ist eine Verringerung oder bestenfalls vollständige Vermeidung derartiger Partikel anzustreben.

Für den Vulkanisationsprozess werden typischerweise so genannte Primer (Haftvermittler) eingesetzt um ein Anhaften des Dichtmaterials an der Metalloberfläche zu gewährleisten. Nachteilig ist bei einem solchen Einsatz, dass der Haftvermittler auch nach dem Vulkanisationsprozess z.B. bei Unterdrücken ausdampfen und in einem oben genannten Anwendungsfall auch in ein Prozessvolumen gelangen kann und damit einen Bearbeitungsprozess nachteilig beeinflussen kann.

Es ist daher Aufgabe der Erfindung, eine Dichtkomponente für ein Vakuumventil, d.h. für eine Verschlussplatte bzw. Verschlusselement oder einen Ventilsitz, mit einer aufvulkanisierten Dichtung zur Verfügung zu stellen, wobei eine verbesserte Prozesssicherheit erzielt wird.

Insbesondere ist es eine Aufgabe eine entsprechende Dichtkomponente bereitzustellen, wobei eine produktionsbedingte Gratbildung oder die Entstehung von Rückstandspartikeln zumindest in dem dem abzuschliessenden Prozessvolumen zugewandten Teil minimiert oder gänzlich vermieden ist.

Eine weitere Aufgabe ist es, die Dichtkomponente so herzustellen, dass eine durch die Ausbildung der Dichtkomponente bedingte Kontamination eines Prozessvolumens weniger wahrscheinlich ist oder verhindert wird.

Diese Aufgaben werden durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Die Erfindung betrifft ein Vakuumventil, insbesondere ein Vakuumregelventil z.B. Pendelventil oder Vakuumtransferventil, zur Regelung eines Volumen- oder Massenstroms und/oder zum gasdichten Unterbrechen eines Fliesswegs. Das Vakuumventil hat einen Ventilsitz mit einer eine Öffnungsachse definierenden Ventilöffnung und einer die Ventilöffnung umlaufenden ersten Dichtfläche, und hat ein Verschlusselement (Ventilteller) mit einer zu der ersten Dichtfläche korrespondierenden zweiten Dichtfläche, insbesondere bezüglich Verlauf und Dimension der Dichtfläche.

Die erste Dichtfläche und/oder die zweite Dichtfläche weist einen zumindest zweikomponentigen Materialverbund auf und der Materialverbund wiederum weist eine metallische Trägerkomponente und ein polymerbasiertes Dichtmaterial auf. Das Dichtmaterial ist mit definiertem Profil, insbesondere mit definierter Höhe in Richtung der Flächennormalen der Trägerkomponente, auf die Trägerkomponente entlang eines Dichtflächenverlaufs gebracht, insbesondere anvulkanisiert.

Erfindungsgemäss definiert die metallische Trägerkomponente einen inneren Trägerbereich und einen äusseren Trägerbereich. In anderen Worten, sind der innere und der äussere Trägerbereich durch eine durch die Grenzschicht zwischen Trägerkomponente und Dichtmaterial definierte Ebene getrennt.

Die metallische Trägerkomponente weist - insbesondere bezüglich der Grenzebene zwischen Trägerkomponente und Dichtmaterial - im Bereich der jeweiligen Dichtfläche eine Vielzahl sich in den inneren Trägerbereich erstreckender definierter Vertiefungen auf, wobei jede der Vertiefungen jeweils ein Volumen und eine Tiefe definiert. Das Dichtmaterial ist zudem derart an die Trägerkomponente aufgebracht, dass das definierte Profil des Dichtmaterials an dem äusseren Trägerbereich vorliegt und ein Teil des Dichtmaterials sich zumindest in einen Teil der Vertiefungen der Trägerkomponente erstreckt und diese bezüglich Volumen und/oder Tiefe mindestens zur Hälfte ausfüllt, insbesondere mindestens 50% des Volumens und/oder der Tiefe ausfüllt oder einnimmt.

Die Befüllung des Vertiefungsvolumens betrifft das durch die jeweilige Vertiefung definierte Volumen oder einen unter Berücksichtigung mehrere Vertiefungen, insbesondere sämtlicher Vertiefungen, resultierenden Volumenmittelwert.

Das Dichtmaterial kann beispielsweise mittels Spritzgiessen, Siebdrucken oder im Rahmen eines vulkanisierenden Anpressverfahrens an die Trägerkomponente anhaftend gebracht sein. Insbesondere liegt das Dichtmaterial in einem vernetzten oder vulkanisierten Zustand vor, wobei das Dichtmaterial an dem Träger haftet.

Das Anhaften des Dichtmaterials an der Trägerkomponente kann dadurch im Wesentlichen durch ein mechanisches Verkrallen des Dichtmaterials in den Vertiefungen bereitgestellt sein. Insbesondere kann der Materialverbund haftvermittlerfrei, d.h. ohne einen so genannten Primer oder Haftvermittler, bereitgestellt sein. Diese beiden Faktoren sorgen bereits jeweils einzeln jedoch auch in Kombination dafür, dass eine Dichtung für ein Vakuumventil zuverlässiger bereitgestellt ist. Ohne Haftvermittler werden negativ beeinflussende Ausdampfungen des Haftvermittlers vermieden. Die Ausdampfungen können nicht nur die Haftqualität per se negativ beeinflussen, sondern können diese Ausdampfungen auch eine Reaktion des Haftvermittlers mit einem Prozessgas in einer Prozesskammer (Vakuumvolumen) verursachen, wobei die haftvermittelnde Wirkung dieser Komponente verloren gehen oder zumindest stark abnehmen kann. Hierbei kann insbesondere eine Ablösung des Dichtmaterials von dem metallischen Untergrund die Folge sein. Zudem kann hieraus eine Verunreinigung des Prozessgases und damit des gesamten Produktionsprozesses resultieren.

Mittels der erfindungsgemäss bereitgestellten Verkrallung wird hingegen eine hochstabile, langzeitbeständige und robuste Anhaftung des Dichtmaterials am Trägermaterial bereitgestellt, ohne dass ein Haftvermittler eingesetzt ist.

In einer Ausführungsform ist eine mit dem Ventilteller gekoppelte Antriebseinheit vorgesehen, die derart ausgebildet ist, dass der Ventilteller zumindest von einer Offenposition, in welcher der Ventilteller und der Ventilsitz relativ zueinander kontaktlos vorliegen, in eine Schliessposition, in welcher über ein dazwischen befindliches Dichtmaterial ein axial dichtender Kontakt zwischen der ersten Dichtfläche und der zweite Dichtfläche besteht und die Ventilöffnung dadurch gasdicht verschlossen ist, und zurück verstellbar ist, zumindest im Wesentlichen entlang einer geometrischen Längsachse in eine Längsschliessrichtung.

Ein Füllgrad bezüglich einer Ausfüllung einer der Vertiefungen oder einer Mehrzahl, insbesondere sämtlicher, der Vertiefungen mit dem Dichtmaterial kann gemittelt mindestens 50% betragen, insbesondere mindestens 75% oder mindestens 90%.

Mindestens 50%, insbesondere mindestens 75% oder mindestens 90%, der durch die Vertiefungen definierten Volumina, können zu mindestens 50%, insbesondere mindestens 75% oder mindestens 90%, mit dem Dichtmaterial ausgefüllt sein.

Bezüglich der Ausgestaltung der Vertiefungen sind erfindungsgemäss unterschiedliche Ausführungsformen denkbar. Zumindest eine der Vertiefungen, insbesondere eine Mehrzahl oder im Wesentlichen alle Vertiefungen, im inneren Trägerbereich können ausgeformt sein als:
- einseitig begrenzte, zylindrische Ausnehmung (z.B. Kanal) mit definierter Tiefe oder
- einseitig begrenzte, zylindrische Ausnehmung mit definierter Tiefe mit einem bezüglich des Ausnehmungsdurchmesser vergrösserten Endbereich, insbesondere mit ellipsoidförmigem Endvolumen, insbesondere Depotvolumen, oder
- Vertiefung mit einem Hinterschnitt oder
- kegelförmige oder keilförmige Vertiefung mit einer mit zunehmender Tiefe abnehmenden oder zunehmenden Breite.

Gemäss einer Ausführungsform der Erfindung weist zumindest eine der Vertiefungen, insbesondere eine Mehrzahl oder im Wesentlichen alle Vertiefungen, eine Tiefe im inneren Trägerbereich aus einem Bereich zwischen 200 µm und 500 µm auf, insbesondere aus einem Bereich zwischen 300 µm und 400 µm. Besagte Vertiefung erstreckt sich somit bezüglich der Trägeroberfläche über eine Länge von z.B. 300 µm oder 350 µm in das Innere des Trägermaterials.

Zumindest eine der Vertiefungen, insbesondere eine Mehrzahl oder im Wesentlichen alle Vertiefungen, können einen Innendurchmesser, insbesondere bezüglich deren Oberfläche, aus einem Bereich zwischen 80 µm und 200 µm aufweisen, insbesondere aus einem Bereich zwischen 100 µm und 130 µm.

In einer Ausführungsform ist zumindest eine der Vertiefungen, insbesondere eine Mehrzahl oder im Wesentlichen alle Vertiefungen, mit einem Verhältnis von Innendurchmesser zu Tiefe im inneren Trägerbereich von d:t < 1:2, insbesondere von d:t < 1:3 oder d:t < 1:4, ausgeformt.

Obige Spezifikationen können sich alternativ auch auf jeweilige Mittelwerte bezüglich mehrere oder aller erzeugten Vertiefungen beziehen. Eine gemittelte Tiefe der Vertiefungen kann also in einem Bereich zwischen 200 µm und 500 µm liegen, insbesondere in einem Bereich zwischen 300 µm und 400 µm. Ein gemittelter Innendurchmesser kann in einem Bereich zwischen 80 µm und 200 µm liegen, insbesondere in einem Bereich zwischen 100 µm und 130 µm. Ein mittleres Verhältnis von Durchmesser zu Tiefe kann für die Vertiefungen von d:t < 1:2, insbesondere von d:t < 1:3 oder d:t < 1:4, vorliegen.

Gemäss einer Ausführungsform der Erfindung ist ein Abstand jeweils benachbarter Vertiefungen, insbesondere von Mittelpunkt zu Mittelpunkt, 100 µm < a < 250 µm. Die benachbarten Vertiefungen liegen hierbei insbesondere in einer Reihe oder entlang eines Pfades, welcher sich entlang des Dichtungsverlaufs erstreckt.

Erfindungsgemäss kann sich wenigstens eine der Vertiefungen, insbesondere eine Mehrzahl oder die gesamte Vielzahl der Vertiefungen, über einen Teil entlang der Dichtfläche erstrecken. Insbesondere kann diese Vertiefung konzentrisch bezüglich der Ventilöffnung oder gemäss der Form der Dichtfläche angelegt sein.

Jeweils benachbarte Vertiefungen können bezüglich ihrer Ausrichtungen im Wesentlichen parallel angeordnet sein oder die Vertiefungen können bezüglich ihrer Ausrichtung (gezielt) chaotisch angeordnet sein.

Die erzeugten Vertiefungen können zudem den Zweck eines Überlaufvolumens erfüllen. Für die Herstellung einer Dichtung gemäss dieser Erfindung wird für den Vulkanisationsprozess typischerweise ein grösseres Volumen benötigt, als die damit hergestellte Dichtung letztlich einnimmt, da das Dichtmaterial während der Vulkanisation eine räumliche Ausdehnung und anschliessend wiederum eine Kontraktion erfährt. Ein Volumen einer Vertiefung, insbesondere mehrerer oder aller Vertiefungen oder ein Mittelwert für das Volumen, kann derart definiert sein, dass das Volumen grösser ist, als ein durch das Volumen des vulkanisierten Dichtmaterials eingenommenes Volumen in der Vertiefung. Insbesondere kann dieses Volumen derart grösser sein, dass eine während eines Vulkanisierens auftretende Vergrösserung der räumlichen Ausdehnung des Dichtmaterials in der Vertiefung aufgenommen werden kann. Hierdurch kann z.B. auf die Vorsehung eines zusätzlichen Überlaufkanals verzichtet werden.

Der beschriebene zweikomponentige Materialverbund, insbesondere die Vertiefungen, können nach einem unten beschriebenen Verfahren hergestellt sein.

Die Erfindung betrifft zudem ein Verschlusselement, insbesondere ein Ventilteller, für ein Vakuumventil welches ausgebildet ist zur Regelung eines Volumen- oder Massenstroms und/oder zum gasdichten Abschluss eines Prozessvolumens mittels Zusammenwirkens mit einer für das Prozessvolumen vorgesehenen Vakuumventilöffnung des Vakuumventils. Das Verschlusselement hat eine zu einer ersten Dichtfläche der Ventilöffnung, insbesondere hinsichtlich Form und Grösse, korrespondierende zweite Dichtfläche, wobei die erste Dichtfläche die Vakuumventilöffnung umläuft. Die zweite Dichtfläche weist einen zweikomponentigen Materialverbund auf und der Materialverbund weist wiederum eine metallische Trägerkomponente und ein polymerbasiertes Dichtmaterial auf. Das Dichtmaterial ist mit definiertem Profil, insbesondere mit definierter Höhe in Richtung der Flächennormalen der Trägerkomponente, auf die Trägerkomponente entlang eines Dichtflächenverlaufs aufgebracht, insbesondere aufvulkanisiert.

Erfindungsgemäss definiert die metallische Trägerkomponente einen inneren Trägerbereich und einen äusseren Trägerbereich und die metallische Trägerkomponente weist bezüglich einer Grenzebene zwischen Trägerkomponente und Dichtmaterial im Bereich der jeweiligen Dichtfläche eine Vielzahl sich in den inneren Trägerbereich erstreckender definierter Vertiefungen auf, wobei jede der Vertiefungen jeweils ein Volumen und eine Tiefe definiert. Das Dichtmaterial ist derart an die Trägerkomponente vulkanisiert, dass das definierte Profil des Dichtmaterials im Wesentlichen an dem äusseren Trägerbereich vorliegt und ein Teil des Dichtmaterials sich zumindest in einen Teil der Vertiefungen der Trägerkomponente erstreckt und diese bezüglich Volumina und/oder Tiefe mindestens zur Hälfte ausfüllt.

Die Erfindung betrifft ferner ein Verfahren zur Herstellung eines zumindest zweikomponentigen Materialverbunds für zumindest eine Dichtfläche eines Vakuumventils, mit einem zumindest einen Teil eines Verschlusselements oder eines Ventilsitzes des Vakuumventils verkörpernden und eine Trägerkomponente für den zweikomponentigen Materialverbund bildenden, metallischen Materialrohteil, wobei eine Oberfläche des Materialrohteils einen inneren Trägerbereich von einem äusseren Trägerbereich trennt und definiert.

Es erfolgt eine Oberflächenbearbeitung des Materialrohteils derart, dass eine Vielzahl sich in den inneren Trägerbereich erstreckender definierter Vertiefungen entlang der zu erzeugenden Dichtfläche erzeugt wird. Das Materialrohteil und ein polymerbasiertes Dichtmaterial werden in einem offenen Werkzeugzustand in ein Mehrfunktionswerkzeug eingebracht, in einem Verpress- und/oder Heizschritt wird durch Schliessen des Mehrfunktionswerkzeugs das Dichtmaterial derart verformt und/oder verflüssigt, insbesondere gepresst oder gedrückt, dass ein Teil des Dichtmaterials in die Vertiefungen des Materialrohteils gelangt und diese zumindest teilweise ausfüllt, und in einem Endschritt erfolgt ein Normalisieren, insbesondere Abkühlen und/oder Entspannen, eines Zustands des Dichtmaterials und/oder der Trägerkomponente.

Insbesondere erfolgt vor Ausführung des Endschritts ein Vulkanisationsschritt mit einem Vulkanisieren des Dichtmaterials derart, dass ein erster Teil des Dichtmaterials entlang eines Dichtflächenverlaufs mit einem definierten Profil auf dem äusseren Trägerbereich vulkanisiert vorliegt, und ein zweiter Teil des Dichtmaterials sich in die Vertiefungen des Materialrohteils erstreckend und die Vertiefungen mindestens zur Hälfte ausfüllend vulkanisiert vorliegt. Insbesondere wird das Mehrfunktionswerkzeug während des Vulkanisationsschritts gemäss einer vorbestimmten Vernetzungskurve temperiert.

Im Speziellen erfolgt das Erzeugen der Vertiefungen durch zumindest eines der folgenden Mittel, d.h. durch Anwendung von:
- gepulster Laserstrahlung,
- Fräsen,
- Ätzen,
- Bohren, und/oder
- Pressen.

Insbesondere erfolgt das Erzeugen einer der Vertiefungen dadurch, dass ein fokussierter Laserstrahl auf eine bestimmte Position an der Oberfläche des Materialrohteils gerichtet wird, wobei die Laserstrahlung unter Beibehaltung der Ausrichtung auf die bestimmte Position (die relative Ausrichtung auf die Position bleibt erhalten) mehrfach, insbesondere mindestens 10-mal oder mindestens 50-mal, und gepulst emittiert wird.

Die Erfindung betrifft ausserdem ein Verschlusselement, das durch Ausführung des genannten Verfahrens erhalten wird. Insbesondere wobei ein Verschlusselement wie beschrieben ausgebildet wird bzw. ist.

Die erfindungsgemässen Vorrichtungen und das erfindungsgemässe Verfahren werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig. 1: eine erste Ausführungsform für ein erfindungsgemässes Vakuumventil;
- Fig. 2: einen im Wesentlichen rechteckigen Ventilteller für ein Vakuumventil gemäss der Erfindung;
- Figs. 3a-f: unterschiedliche Ausführungsformen für die erfindungsgemäss in der Trägerkomponente (Ventilsitz oder Ventilteller) erzeugten Vertiefungen; und
- Fig. 4: einen Querschnitt durch einen erfindungsgemässen mindestens zweikomponentigen Materialverbund aus einer metallischen Trägerkomponente und einem polymerbasierten Dichtmaterial.

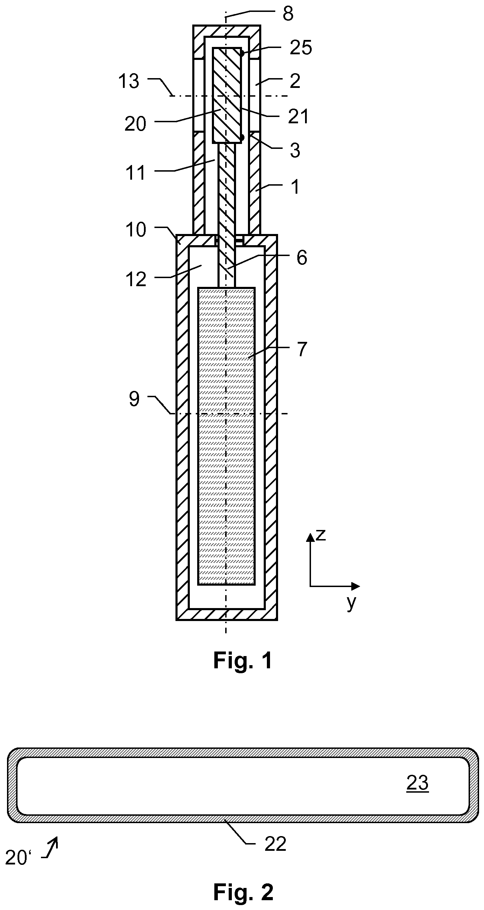

In Figur 1 ist eine erste Ausführungsform eines erfindungsgemässen Vakuumschieberventils dargestellt. Das Vakuumschieberventil besitzt ein Ventilgehäuse 10 mit einer Ventilwand 1, die eine Öffnung 2 mit einer Öffnungsachse 13 und mit einem länglichen, im Wesentlichen rechteckigen und einen die Öffnung 2 umlaufenden Ventilsitz 3 aufweist. Ein Verschlusselement 20 mit einer, insbesondere prozessseitig vorgesehenen, Verschlussseite 21, die einen etwas grösseren Querschnitt als die Öffnung 2 aufweist, dient zum im Wesentlichen gasdichten Verschliessen der Öffnung 2, indem die Verschlussseite 21 auf den Ventilsitz 3 gedrückt wird. Das Verschlusselement 20 wird von zwei parallel zueinander angeordneten Ventilstangen 6 getragen. Da die Ventilstangen in Figur 1 in der Seitenansicht gezeigt sind, ist dort lediglich eine Ventilstange 6 erkennbar. Gemäss alternativen erfindungsgemässen Ausführungsformen kann auch nur eine einzige Ventilstange 6 vorgesehen sein und das Verschlusselement 20 von dieser getragen sein.

Das Ventilgehäuse 10 unterteilt sich in einen Vakuumbereich 11, in welchem die Öffnung 2, der Ventilsitz 3 und die Verschlussplatte 20 angeordnet sind, und einen Antriebsbereich 12, der ausserhalb des Vakuumbereichs 11 liegt. Die beiden Ventilstangen 6 sind durch zwei gasdichte Durchführungen, die als Membrandichtungen oder Membranbälge mit Dichtungen an deren Endstücken (z.B. O-Ringe) ausgeführt sind, im Ventilgehäuse 10 von dem Vakuumbereich 11 in den Antriebsbereich 12 hindurchgeführt. Die Membrandichtungen oder die Membranbälge sind derart ausgeführt, dass die Ventilstangen 6 unter Aufrechterhaltung der gasdichten Abdichtung in einem gewissen Bewegungsbereich entlang einer Längsachse 8 und einer Querachse 9 bewegbar sind. Da der Antriebsbereich 12 von dem Vakuumbereich 11 gasdicht getrennt ist, kann im Antriebsbereich 12 ein Atmosphärendruck herrschen. Im Antriebsbereich 12 befindliche Reibpartikel können nicht in den sensiblen Vakuumbereich gelangen. Im Antriebbereich 12 ist eine Antriebseinheit 7 angeordnet.

Die Antriebseinheit 7 ist, derart ausgebildet ist, dass die Verschlussplatte 20 durch Verstellen der beiden Ventilstangen 6 entlang der geometrischen Längsachse 8 in eine Längsschliessrichtung z von einer Offenposition, in die hier gezeigte Zwischenposition, und durch Verstellen der beiden Ventilstangen 6 entlang der rechtwinklig zur Längsachse 8 verlaufenden geometrischen Querachse 9 in eine Querschliessrichtung y von der Zwischenposition, in eine Schliessposition, und zurück verstellbar (Bewegung der Verschlussplatte ist L-förmig, daher die Bezeichnung L-Typ) .

Das Verschlusselement 20 weist ein umlaufendes, aufvulkanisiertes Dichtmaterial 25 auf, welches z.B. mittels einer Verpressung hin zum inliegenden Bereich der Verschlussseite 21, also zur durch die Dichtung abgeschlossenen Fläche auf der Verschlussseite 21, begrenzt ist. Das polymerartige Dichtmaterial 25 ist im Wesentlichen mittels mechanischer Verkrallung in geschaffenen Vertiefungen im Trägermaterial 20 verankert, wodurch die Haftung des Dichtmaterials 25 im Wesentlichen bereitgestellt ist. Die Haftung des Dichtmaterials 25 kann insbesondere zu einem geringen Anteil auch auf Basis einer chemischen Bindung geschaffen sein. Die Haftung des Dichtmaterials 25 an dem Trägermaterial 20 setzt sich dann z.B. aus einer mechanischen Haftkomponenten und einer chemischen Haftkomponente zusammen, welche in Summe eine Gesamthaftung für das Dichtmaterial 25 ergeben. Beispielsweise kann die Haftung zu 90% auf mechanische Effekte und zu 10% auf chemische Effekte zurückzuführen sein.

Eine detaillierte Darstellung und Beschreibung der erfindungsgemässen Ausgestaltung des Dichtungs- und Übergangsbereichs Dichtung/Metall ist nachfolgend angeführt.

Eine weiter Ausführungsform der Erfindung betrifft ein Ventilschieberventil (hier nicht gezeigt), welches beispielsweise unter der Produktbezeichnung "MONOVAT Reihe 02 und 03" bekannt ist und als Rechteckinsertventil ausgestaltetes Transferventil der Firma VAT Vakuumventile AG in Haag, Schweiz einen rechteckigen Öffnungsquerschnitt aufweist, dessen Breite wesentlich grösser ist als dessen Höhe. Auch sind derartige Ventiltypen mit komplexen Dichtungsstrukturen bekannt, z.B. aus der EP 2 420 709 A1 der Anmelderin.

Solche Ventile sind ebenfalls zum gasdichten Schliessen eines Fliesswegs jedoch allein mittels einer Linearbewegung des Verschlusselements vorgesehen. Das Verschlussglied ist linear entlang einer zu der Öffnungsachse quer verlaufenden, geometrischen Verstellachse in einer Verschlussgliedebene von einer die Öffnung freigebenden, geöffneten Position in eine über die Öffnung linear geschobene, geschlossene Position in eine Schliessrichtung und umgekehrt zurück in eine Öffnungsrichtung verschiebbar. In einer Schliessposition ist das auf der Dichtfläche des Verschlusselements aufgebrachte Dichtmaterial auf die die Öffnung umlaufende Dichtfläche gedrückt.

Ein solches aus dem Stand der Technik bekanntes, mittels einer einzigen linearen Bewegung schliessbares Vakuumventil hat Vorteile gegenüber den mittels zweier Bewegungen schliessbaren Transferventilen, die einen verhältnismässig komplex aufgebauten Antrieb erfordern, oder gegenüber den Keilventilen, bei welchen die Dichtungen quer beansprucht werden. Da das Verschlussglied des oben beschriebenen Vakuumventils einteilig ist, kann es hohen Beschleunigungskräften ausgesetzt werden, so dass dieses Ventil auch für Schnell- und Notverschlüsse verwendet werden kann. Das Schliessen und Dichten kann mittels einer einzigen linearen Bewegung erfolgen, so dass ein sehr schnelles Schliessen und Öffnen des Ventils möglich ist. Die umlaufende Dichtung findet in allen ihren Abschnitten eindeutig reproduzierbare Verhältnisse bei den diversen Schliessvorgängen vor. Da die Dichtung beim Schliessen und beim Auftreten des Schliessdruckes im Wesentlichen nur in Richtung der linearen Schliessbewegung in senkrechter Richtung auf die Dichtung bzw. teilweise in Längsrichtung, nicht jedoch quer zu ihrer Längserstreckung beansprucht wird, so dass Querkräfte auf die Dichtung vermieden werden, eignet sich dieses Vakuumventil für hochqualifizierte Dichtaufgaben im Vakuum- und Hochvakuumbereich.

Erfindungsgemäss ist das Dichtmaterial an dem Verschlusselement (Verschlussglied) wiederum durch das Vorsehen definierter Vertiefungen in dem Verschlusselement angehaftet. Das Dichtmaterial erstreckt sich zumindest teilweise in diese Vertiefungen, wodurch eine Verkrallung des Materials gegeben ist.

Es versteht sich, dass die mit Figur 1 gezeigt Ausführung eine beispielhafte Ausführung für ein Vakuumventil darstellt. Die Erfindung erstreckt sich demgemäss auch auf sämtliche alternative Vakuumventile die eine gemäss der Erfindung ausgeführte Dichtung, d.h. einen erfindungsgemässen zweikomponentiger Materialverbund, aufweisen.

Figur 2 zeigt einen im Wesentlichen rechteckigen Ventilteller 20' für ein Vakuumventil gemäss der Erfindung, insbesondere für ein Vakuumventil des L-Typs, in einer Draufsichtdarstellung. Das Ventilteller 20' ist als Trägerkomponente für ein Dichtmaterial aus einem Metall bzw. einer Metalllegierung aufgebaut, z.B. Aluminium oder Edelstahl, wobei eine Dichtfläche 22 mit einer darauf applizierten Dichtung am Rand des Ventiltellers 20' umlaufend vorgesehen ist.

Das Dichtmaterial kann beispielsweise ein Polymer, insbesondere ein Elastomer, sein, wobei das Material insbesondere eine Fluorpolymerkomponente und/oder ein Per-Fluorpolymerkomponente aufweist.

Die Dichtung ist mittels Vulkanisierens eines vernetzbaren Dichtmaterials auf der Dichtfläche 22 erzeugt. Die Oberfläche des Trägers 20' ist derart vorbehandelt, dass eine Vielzahl definierter Vertiefungen sich in das Trägematerial erstrecken und darin jeweils definierte Ausnehmungen bilden. Die Vertiefungen sind vorzugsweise mit einer Tiefe von mindestens 300 µm bezüglich der Trägeroberfläche erzeugt. Die Form der Vertiefung kann beispielsweise zylindrisch, kegel- oder pyramidenförmig mit abnehmender Breite bei zunehmender Tiefe oder auch keilförmig sein, wobei sich die Vertiefung entlang der Dichtkontur (entlang dem Verlauf der Dichtfläche 22) erstrecken kann, insbesondere konzentrisch umlaufend ausgeführt sein kann.

Die effektive Oberfläche des Ventiltellers 20' ist durch die erzeugten Vertiefungen entsprechend vergrössert.

Die Vertiefungen sind mittels Bestrahlung der Trägerkomponente mit gepulster Laserstrahlung erzeugt. Die einzelnen Vertiefungen werden insbesondere durch mehrfachen Beschuss einer bestimmten Oberflächenposition mit der gepulsten Strahlung erzeugt. Die hier verwendete gepulste Laserstrahlung weist eine vergleichsweise hohe Energiedichte pro Puls auf, wodurch bei einer Wechselwirkung mit der metallischen Trägeroberfläche ein Verflüssigen und/oder Verdampfen des Metalls eintritt. Mittels der mehrfachen Applikation auf einer Stelle kann somit eine Vertiefung durch solches Abtragen erzeugt bzw. derartig "gebohrt" werden. Vorzugsweise wird hierfür Laserstrahlung im infraroten Wellenlängenbereich verwendet.

Die Ausbreitungsrichtung der Laserstrahlung ist beispielsweise so gewählt, dass benachbarte Vertiefungen im Wesentlichen parallel zueinander ausgerichtet sind, insbesondere orthogonal zur Oberfläche.

Die Vertiefungen können auch mittels alternativer Methoden hergestellt sein. Z.B. können durch ein sehr gezieltes und feines Fräsen oder mechanisches Bohren jeweilige Vertiefungen erzeugt sein.

Die Vertiefungen sind nur im Bereich der Dichtfläche erzeugt, d.h. innerhalb einer vorbestimmten Fläche. Dies hat den Vorteil, dass diese Art von Oberflächenbearbeitung sich auf diesen definierten Bereich beschränken kann und allein dieser Bereich bearbeitet wird. Hierdurch kann eine effiziente Bearbeitung nur der Dichtfläche erfolgen. Unter dem Gesichtspunkt einer kurzen Prozesszeit ist dies besonderes vorteilhaft.

Im Zuge des Anvulkanisieren des Dichtmaterials an die Dichtfläche 22 wird das Rohmaterial unter Druck und/oder erhöhter Temperatur derart verformt, dass ein Teil des Dichtmaterials in die Vertiefungen eindringt, insbesondere gedrückt wird oder fliesst, und in diesem Zustand vulkanisiert (vernetzt) wird, also in eine gewünschte plastisch-elastische Form gebracht wird. Das Resultat bildet dann eine Dichtfläche mit einem Trägermaterial, das definierte Vertiefungen (hinsichtlich Zahl, Form und Dimension) aufweist, wobei die Vertiefungen mindestens teilweise und zumindest zum Teil mit dem Dichtmaterial gefüllt sind und dadurch ein Anhaften - überwiegend durch Verkrallen des Polymers in den Vertiefungen - des Dichtmaterials an dem Träger bereitgestellt ist. Beispielsweise werden im Rahmen der Vulkanisation mindestens 90% oder bis zu 99% der erzeugten Vertiefungen mit dem Dichtmaterial gefüllt. Der Füllgrad für diese Vertiefungen kann dann vorzugsweise zwischen 50% und 100% liegen, insbesondere zwischen 90% und 99%.

Die Volumina der Vertiefungen sind insbesondere derart gewählt, dass die Vertiefungen nicht nur die Basis für die Haftung darstellen, sondern gleichzeitig in deren Summe als Überlaufvolumen dienen und allfälliges überschüssiges Dichtmaterial aufzunehmen vermögen. Durch eine solche Auslegung kann beispielsweise auf einen typischerweise vorgesehene Überlaufkanal verzichtet werden. Somit wird eine Gratbildung aufgrund überschüssigen Dichtmaterials vermieden und eine Nachbearbeitung einer so hergestellten Dichtungskomponente kann in geringerem Masse ausfallen oder gänzlich entfallen. Als Konsequenz ist mit einer sehr vorteilhaften, entsprechend geringeren Partikelerzeugung zu rechnen.

Ein Abfangen von überschüssigem Dichtmaterial ist auch deshalb vorzusehen, da sich das Volumen des Materials während der Vulkanisation zeitweise vergrössert und in der Folge wieder abnimmt.

Die Fläche 23, die von der Dichtfläche 22 bzw. der aufvulkanisierten Dichtung eingeschlossen ist, ist der im vorgesehenen Einsatz des Verschlusselements 20' in einem Vakuumventil dem abzuschliessenden Prozessvolumen zugewandte Bereich des Verschlusselements 20', wobei in einer Schliessposition des Ventils zudem ein Teil der Dichtung ebenfalls dem Prozessvolumen zugewandt bleibt.

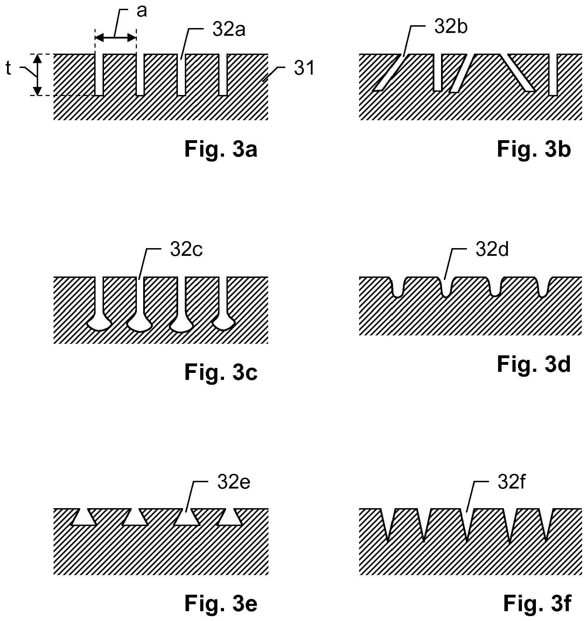

Die Figuren 3a bis 3f zeigen unterschiedliche Ausführungsformen für die erfindungsgemäss in der Trägerkomponente (Ventilsitz oder Ventilteller) erzeugten Vertiefungen.

Figur 3a zeigt regelmässig in einem Dichtungsträger 31 angeordnete Vertiefungen 32a. Die Vertiefungen 32a sind zylindrisch, im Wesentlichen über deren Tiefe homogen geformte Ausnehmungen in dem Trägermaterial. Das Trägermaterial kann beispielsweise auf Basis von Eisen oder Aluminium realisiert sein, insbesondere als jeweilige Legierung. Im Rahmen des Anvulkanisierens eines polymerbasierten Dichtmaterials kann dieses Dichtmaterial derart verformt oder (teilweise) verflüssigt werden, dass ein Teil davon in die Vertiefungen 32a gelangen kann und nach erfolgter Vulkanisation in den Vertiefungen vernetzt und mit dem Trägermaterial verkrallt vorliegen kann.

Die Trägerkomponente weist die Vertiefungen 32a mit insbesondere einem Abstand a > 150 µm zwischen zwei benachbarten Vertiefungen 32a auf, insbesondere mit einem Abstand 250 µm > a > 150 µm. In einer bevorzugten Ausführung beträgt der Abstand a im Wesentlichen 200 µm.

Als benachbarte Vertiefungen werden im Rahmen der vorliegenden Erfindung insbesondere die Vertiefungen verstanden, die entlang einer Linie oder eines Pfades angeordnet sind, beispielsweise mit einem definierten Abstand zu einer Ventilöffnung diese umlaufend oder radial bezüglich einer Ventilöffnung oder deren Zentrum angeordneter Vertiefungen.

Die Vertiefungen 32a sind zwischen 100 µm und 500 µm tief (500 µm > *t* > 200 µm), d.h. sie erstrecken sich von der Oberfläche des Dichtungsträgers 31 mindestens 200 µm weit in das Innere des Trägermaterial, insbesondere mindestens 300 µm weit. Vorzugsweise sind die Vertiefungen 32a bis zu 400 µm tief.

Ausserdem weisen die Vertiefungen 32a einen Innendurchmesser d an der Trägeroberfläche von mindestes 80 µm, insbesondere mindestens 100 µm, auf. Der Durchmesser *d* ist vorzugsweise kleiner als 200 µm, insbesondere kleiner als 130 µm.

In der gezeigten Ausführung mit im Wesentlichen homogenen zylindrischen Ausnehmungen bleibt der Innendruchmesser *d* mit zunehmender Tiefe weitgehend konstant.

Im Speziellen können die Vertiefungen 32a derart ausgeformt sein, dass zumindest eine der Vertiefungen, insbesondere im Wesentlichen alle solche Vertiefungen, mit einem bestimmten Verhältnis von Innendurchmesser (insbesondere bezüglich der Trägeroberfläche) zu Tiefe realisiert sind. Das Verhältnis Innendurchmesser *d* zu Tiefe *t* kann hierfür *d:t* < 1:2 oder *d:t* < 1:3 oder *d:t* < 1:4 sein, d.h. eine Vertiefung ist um mindestens den Faktor 2, 3 oder 4 tiefer als deren Durchmesser misst.

Es versteht sich, dass obige Werte bezüglich Abstand *a,* Tiefe *t* und Durchmesser *d* sich nicht allein auf eine einzelne oder sämtliche Vertiefungen 32a beziehen müssen, sondern im Kontext der Erfindung ebenso jeweils einen Mittelwert für die erzeugten Vertiefungen 32a betreffen können.

Die Vertiefungen 32a können beispielsweise mittels Laserapplizierens in den Dichtungsträger 31 eingebracht werden bzw. worden sein. Hierzu kann z.B. ein Verfahren des Laserbohrens zum Einsatz kommen, wobei mit einem leistungsstarken gepulsten Kurzpulslaser eine Anzahl kurzer Laserpulse (z.B. Pulsdauer im Nano-, Piko- oder Femtosekundenbereich und 10 bis 50 Pulse) mit hoher Wiederholfrequenz (z.B. 50 oder 100 kHz) fokussiert auf die Oberfläche des Trägers gerichtet und emittiert werden. Die Serie von Pulsen bleibt dabei bezüglich der Oberfläche konstant auf die gleiche Position gerichtet. Hierdurch kann eine Vertiefung schrittweise, d.h. Schicht für Schicht, erzeugt werden. Pro auftreffendem Laserpuls wird ein Teil des Trägermaterials "abgebaut", d.h. durch verflüssigen verdrängt oder verdampft.

Die Form der hierbei entstehenden Vertiefung kann beispielsweise über die wählbaren Laserparameter wie Pulsdauer, Pulsspitzenleistung, Wiederholfrequenz oder Strahlfokussierung und -durchmesser und durch damit erzielbaren Effekte wie Plasmabildung eingestellt und bestimmt werden.

Die Vertiefungen 32a können alternativ z.B. mittels anderer spanender, abtragender, pressender, abrasiver oder ätzender Methoden erzeugt werden. Z.B. kann durch feines Präzisionsbohren, Fräsen oder gezieltes Verpressen des Trägermaterials die Vertiefung hergestellt werden.

Die beschriebenen Spezifikationen für die Ausführungsform nach Figur 3a gelten entsprechend für die Ausführungen der Figuren 3b bis 3f.

Die Ausrichtung der Laserstrahlung bestimmt dabei die Erstreckungsrichtung einer Vertiefung im Inneren des Dichtungsträgers 31. Im Beispiel gemäss Figur 3a ist die Ausrichtung des Laserstrahls parallel zu einer Normalen der Oberfläche, d.h. orthogonal zur Oberfläche, gewählt.

Figur 3b zeigt ebenfalls zylindrisch erzeugte Vertiefungen 32b, jedoch mit unterschiedlichen Erstreckungsrichtungen im Trägermaterial. Mit solch einer Variante kann eine weiter verbesserte Haftung des Dichtmaterials an dem Trägermaterial bereitgestellt werden. Durch die quer und nicht orthogonal zur Oberfläche verlaufenden Vertiefungen 32b kann ein darin vulkanisiertes Dichtmaterial insbesondere bei einer entsprechend orthogonalen Beanspruchung nur erschwert von dem Träger abgelöst werden. Insbesondere bei Vertiefungen, deren Erstreckungen gegengerichtet sind (wie gezeigt), wird die Ablösung besonders erschwert.

Die Figur 3c zeigt eine weitere Ausführungsform für erfindungsgemässe Vertiefungen 32c. Diese weisen an deren geschlossenem Ende jeweils ein volumenvergrösserndes Depot auf. Hierdurch kann ein gesamthaft vergrössertes Überlaufvolumen für die Aufnahme von überschüssigem und/oder sich ausdehnendem Dichtmaterial bereitgestellt werden. Für die Herstellung einer Dichtfläche für ein Vakuumventil kann damit auf einen speziellen Überlaufkanal verzichtet werden und die Menge des Dichtmaterials entsprechend passend gewählt sein. Somit kann auf eine Nachbearbeitung der Dichtflächen ebenfalls verzichtet werden, wodurch eine mögliche und darauf beruhende Partikelbildung ausgeschlossen ist. Dies ist insbesondere in Hinblick auf die sehr hohen Reinheitsstandards in der Vakuumtechnik von Vorteil.

Mit Figur 3d sind weitere alternative Vertiefungen 32d in Form von sich in die Zeichnungsebene erstreckenden Nuten gezeigt. Solche Nuten 32d können z.B. in das Material gepresst oder gefräst werden. Die Nuten 32d können insbesondere entlang der Form der zu bildenden Dichtfläche geformt sein, z.B. konzentrisch zur Ventilöffnung und diese Ventilöffnung umlaufend.

Figur 3e zeigt erfindungsgemässe Vertiefungen 32e in Form von Bohrungen mit einem jeweiligen Hinterschnitt. Durch die Form der Vertiefungen 32e wird die Haftung des Dichtmaterials an dem Träger weiter verstärkt. Ein Herauslösen des vulkanisiert vorliegenden Dichtmaterials aus den Vertiefungen ist aufgrund des mit zunehmender Tiefe zunehmendem Innendurchmessers oder -breite deutlich erschwert.

Die Figur 3f veranschaulicht eine weitere Variante von Vertiefungen 32f gemäss der Erfindung. Die Vertiefungen 32f sind kegelförmig bzw. pyramidenförmig oder keilförmig ausgebildet, wobei bei einer keilförmigen Ausgestaltung diese Vertiefungen z.B. sich in die Zeichnungsebene erstreckend erzeugt sind und zumindest in einem Teilbereich konzentrisch zur Ventilöffnung verlaufen.

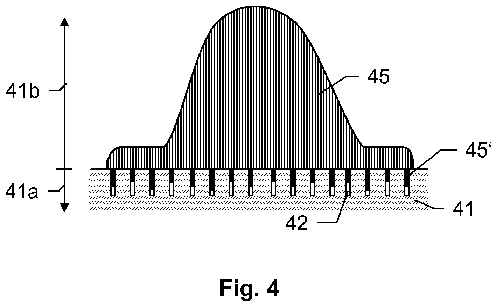

Figur 4 zeigt einen Querschnitt durch einen erfindungsgemässen mindestens zweikomponentigen Materialverbund aus einer metallischen Trägerkomponente 41 und einem polymerbasierten Dichtmaterial 45. Der Materialverbund verkörpert den einseitigen Teil einer Vakuumdichtung für ein Vakuumventil.

Die Trägerkomponente 41 definiert bezüglich einer durch den Verlauf der Dichtfläche definierten bzw. durch die Grenzfläche zwischen Trägerkomponente 41 und Dichtmaterial 45 definierten Ebene einen inneren Trägerbereich 41a und einen äusseren Trägerbereich 41b.

Zur Herstellung einer Abdichtung wird das Dichtmaterial 45 mittels einer hier nicht gezeigten Gegenkomponente, z.B. einer gegenüberliegenden Dichtfläche, verpresst. Die Dichtfläche weist hierzu insbesondere eine Form auf, die jener Form des Dichtmaterials 45 entlang einer Dichtfläche (ventilsitzseitig oder ventiltellerseitig) des Vakuumventils entspricht.

Das Dichtmaterial 45 basiert insbesondere auf einem Fluorpolymer und ist der Gruppe der Elastomere zuzuordnen. Zur Erzeugung der gezeigten Form des Dichtmaterials 45 wird dieses als Rohmaterial, d.h. unvernetzt und nicht vulkanisiert, zusammen mit dem Trägermaterial in ein temperierbares Werkzeug eingebracht und durch ein Schliessen des Werkzeugs in die gewünschte Form verpresst. In Verbindung mit einem Erhitzen des Werkzeugs bzw. eines entsprechenden Werkzeugsteils wird zunächst die Viskosität des Rohmaterials verringert und das Material kann zum einen in verbesserter Weise die Sollform annehmen und zum zweiten teilweise in die gezeigten Vertiefungen 42 der Trägerkomponente 41 gelangen. In Abhängigkeit der Herstellungsparameter kann das Material in die Vertiefungen 42 fliessen und/oder durch einen aufgebrachten Druck in diese Vertiefungen 42 gedrückt werden.

Im weiteren Verlauf der Temperierung wird durch diese eine Vernetzung (Vulkanisation) des Rohmaterials und damit das Anhaften des Dichtmaterials 45 an dem Trägerelement 41 bewirkt. Die Teile des Dichtmaterials 45', die dann in vulkanisierter Form in den Vertiefungen 42 vorliegen, stellen im Besonderen eine Verkrallung mit dem metallischen Träger 41 bereit. Ein geringer Wirkungsanteil bezüglich der Haftung kann neben der mechanischen Verkrallung auf chemischen Effekten (z.B. chemische Bindungen) beruhen.

Wie oben bereits beschrieben, erstrecken sich die Vertiefungen 42 mit einer definierten Tiefe in jeweils definierte Richtungen in die Trägerkomponente 41. Die Vertiefungen 42 sind insbesondere mittels Laserbearbeitung hergestellt.

Die Figur 4 veranschaulicht ausserdem das Vorliegen des Dichtmaterialanteils 45' in den Vertiefungen. Der Dichtmaterialanteil 45' nimmt bezüglich einer jeweiligen Vertiefung 42 insbesondere mindestens 50% des durch diese Vertiefung 42 definierten Volumens ein. Insbesondere sind die Vertiefungen 42 im Mittel zu mindestens 50% mit dem Material gefüllt. Der angegebene Füllgrad kann sich generell auf die Volumina oder Tiefen der Vertiefungen 42 beziehen.

Es versteht sich, dass die dargestellten Figuren nur mögliche Ausführungsbeispiele schematisch darstellen. Die verschiedenen Ansätze können erfindungsgemäss ebenso miteinander sowie mit Verfahren und Vorrichtungen zum Verschliessen von Prozessvolumina unter Vakuumbedingungen des Stands der Technik kombiniert werden.

## Patentansprüche

1. Vakuumventil, insbesondere Vakuumregelventil, zur Regelung eines Volumen- oder Massenstroms und/oder zum gasdichten Unterbrechen eines Fliesswegs, mit
• einem Ventilsitz (3) aufweisend
□ eine eine Öffnungsachse (13) definierende Ventilöffnung (2) und
□ eine die Ventilöffnung (2) umlaufende erste Dichtfläche, und
• einem Verschlusselement (20,20') mit einer zu der ersten Dichtfläche korrespondierenden zweiten Dichtfläche (22), insbesondere bezüglich Verlauf und Dimension der Dichtfläche,
wobei
• die erste Dichtfläche und/oder die zweite Dichtfläche (22) einen zumindest zweikomponentigen Materialverbund aufweist und der Materialverbund eine metallische Trägerkomponente (31,41) und ein polymerbasiertes Dichtmaterial (25,45) aufweist, und
• das Dichtmaterial (25,45) mit definiertem Profil, insbesondere mit definierter Höhe in Richtung der Flächennormalen der Trägerkomponente, auf die Trägerkomponente (31,41) entlang eines Dichtflächenverlaufs aufgebracht ist, insbesondere anvulkanisiert ist,
**dadurch gekennzeichnet, dass**
• die metallische Trägerkomponente (31,41) einen inneren Trägerbereich (41a) und einen äusseren Trägerbereich (41b) definiert,
• die metallische Trägerkomponente (31,41) im Bereich der jeweiligen Dichtfläche (3,22) eine Vielzahl sich in den inneren Trägerbereich (41a) erstreckender definierter Vertiefungen (32a-f,42) aufweist, wobei jede der Vertiefungen (32a-f,42) jeweils ein Volumen und eine Tiefe (t) definiert, und
• das Dichtmaterial (25,45) derart auf die Trägerkomponente (31,41) aufgebracht ist, dass
□ das definierte Profil des Dichtmaterials (25,45) an dem äusseren Trägerbereich (41b) vorliegt und
□ ein Teil des Dichtmaterials (41') sich zumindest in einen Teil der Vertiefungen (32a-f,42) der Trägerkomponente (31,41) erstreckt und diese bezüglich Volumen und/oder Tiefe zu mindestens 50% ausfüllt,
insbesondere wobei der zweikomponentige Materialverbund nach einem Verfahren gemäss einem der Ansprüche 12 bis 14 hergestellt ist.

2. Vakuumventil nach Anspruch 1,
**dadurch gekennzeichnet, dass**
• ein Füllgrad bezüglich einer Ausfüllung einer der Vertiefungen (32a-f,42) oder einer Mehrzahl, insbesondere sämtlicher, der Vertiefungen (32a-f,42) mit dem Dichtmaterial (41') gemittelt mindestens 50% beträgt, insbesondere mindestens 75% oder mindestens 90%,
und/oder
• mindestens 50%, insbesondere mindestens 75% oder mindestens 90%, der durch die Vertiefungen (32a-f,42) definierten Volumina, zu mindestens 50%, insbesondere mindestens 75% oder mindestens 90%, mit dem Dichtmaterial ausgefüllt sind.

3. Vakuumventil nach Anspruch 1 oder 2,
**dadurch gekennzeichnet, dass**
zumindest eine der Vertiefungen (32a-f,42), insbesondere eine Mehrzahl oder im Wesentlichen alle Vertiefungen, im inneren Trägerbereich ausgeformt ist als
• einseitig begrenzte, zylindrische Ausnehmung (32a-b) mit definierter Tiefe (t) oder
• einseitig begrenzte, zylindrische Ausnehmung mit definierter Tiefe (t) mit einem bezüglich des Ausnehmungsdurchmesser vergrösserten Endbereich (32c), insbesondere mit ellipsoidförmigem Endvolumen, insbesondere Depotvolumen, oder
• Vertiefung mit einem Hinterschnitt (32e) oder
• kegelförmige oder keilförmige Vertiefung (32f) mit einer mit zunehmender Tiefe abnehmenden oder zunehmenden Breite.

4. Vakuumventil nach einem der Ansprüche 1 bis 3,
**dadurch gekennzeichnet, dass**
zumindest eine der Vertiefungen (32a-f,42), insbesondere eine Mehrzahl oder im Wesentlichen alle Vertiefungen,
• eine Tiefe (t) im inneren Trägerbereich aus einem Bereich zwischen 200 µm und 500 µm aufweist, insbesondere aus einem Bereich zwischen 300 µm und 400 µm,
und/oder
• einen Innendurchmesser d, insbesondere an deren Oberfläche, aus einem Bereich zwischen 80 µm und 200 µm aufweist, insbesondere aus einem Bereich zwischen 100 µm und 130 µm,
und/oder
• mit einem Verhältnis von Innendurchmesser d zu Tiefe *t* im inneren Trägerbereich von *d:t* < 1:2, insbesondere von *d:t* < 1:3 oder *d:t* < 1:4, ausgeformt ist.

5. Vakuumventil nach einem der Ansprüche 1 bis 4,
**dadurch gekennzeichnet, dass**
• eine gemittelte Tiefe (t) für die Vielzahl der Vertiefungen (32a-f,42) in einem Bereich zwischen 200 µm und 500 µm liegt, insbesondere in einem Bereich zwischen 300 µm und 400 µm, und/oder
• ein gemittelter Innendurchmesser *d* für die Vielzahl der Vertiefungen (32a-f,42) in einem Bereich zwischen 80 µm und 200 µm liegt, insbesondere in einem Bereich zwischen 100 µm und 130 µm, und/oder
• ein mittleres Verhältnis von Innendurchmesser *d* zu Tiefe t für die Vielzahl der Vertiefungen (32a-f,42) von *d:t* < 1:2, insbesondere von *d:t* < 1:3 oder *d;t* < 1:4, vorliegt.

6. Vakuumventil nach einem der Ansprüche 1 bis 5,
**dadurch gekennzeichnet, dass**
• das Anhaften des Dichtmaterials an der Trägerkomponente im Wesentlichen durch ein mechanisches Verkrallen des Dichtmaterials (25,45) in den Vertiefungen (32a-f,42) bereitgestellt ist,
und/oder
• der Materialverbund haftvermittlerfrei bereitgestellt ist.

7. Vakuumventil nach einem der Ansprüche 1 bis 6,
**dadurch gekennzeichnet, dass**
ein Abstand (a) jeweils benachbarter Vertiefungen (32a-f,42), insbesondere von Mittelpunkt zu Mittelpunkt, 100 µm < *a* < 250 µm ist.

8. Vakuumventil nach einem der Ansprüche 1 bis 7,
**dadurch gekennzeichnet, dass**
wenigstens eine der Vertiefungen (32a-f,42), insbesondere die gesamte Vielzahl der Vertiefungen, sich entlang der Dichtfläche erstreckt, insbesondere konzentrisch bezüglich der Ventilöffnung.

9. Vakuumventil nach einem der Ansprüche 1 bis 8,
**dadurch gekennzeichnet, dass**
• jeweils benachbarte Vertiefungen (32a-f,42) bezüglich ihrer Ausrichtungen im Wesentlichen parallel angeordnet sind oder
• die Vertiefungen (32a-f,42) bezüglich ihrer Ausrichtung gezielt chaotisch angeordnet sind.

10. Vakuumventil nach einem der Ansprüche 1 bis 9,
**dadurch gekennzeichnet, dass**
ein Volumen einer Vertiefung (32a-f,42), insbesondere aller Vertiefungen oder ein Mittelwert für das Volumen, derart definiert ist, dass das Volumen grösser ist, als ein durch das Volumen des insbesondere vulkanisierten Dichtmaterials eingenommenes Volumen in der Vertiefung (32a-f,42), insbesondere derart grösser ist, dass eine während eines Vulkanisierens auftretende Vergrösserung der räumlichen Ausdehnung des Dichtmaterials (25,45) in der Vertiefung (32a-f,42) aufnehmbar ist.

11. Verschlusselement (20,20'), insbesondere Ventilteller, für ein Vakuumventil und ausgebildet zur Regelung eines Volumen- oder Massenstroms und/oder zum gasdichten Abschluss eines Prozessvolumens mittels Zusammenwirkens mit einer für das Prozessvolumen vorgesehenen Vakuumventilöffnung (2) des Vakuumventils, mit einer zu einer ersten Dichtfläche der Ventilöffnung, insbesondere hinsichtlich Form und Grösse, korrespondierenden zweiten Dichtfläche (22), wobei die erste Dichtfläche die Vakuumventilöffnung (2) umläuft, wobei
• die zweite Dichtfläche (22) einen zweikomponentigen Materialverbund aufweist und der Materialverbund eine metallische Trägerkomponente (31,41) und ein polymerbasiertes Dichtmaterial (25,45) aufweist, und
• das Dichtmaterial (25,45) mit definiertem Profil, insbesondere mit definierter Höhe in Richtung der Flächennormalen der Trägerkomponente, auf die Trägerkomponente (31,41) entlang eines Dichtflächenverlaufs aufgebracht ist, insbesondere aufvulkanisiert ist,
**dadurch gekennzeichnet, dass**
• die metallische Trägerkomponente (31,41) einen inneren Trägerbereich (41a) und einen äusseren Trägerbereich (41b) definiert,
• die metallische Trägerkomponente (31,41) im Bereich der jeweiligen Dichtfläche (3,22) eine Vielzahl sich in den inneren Trägerbereich (41a) erstreckender definierter Vertiefungen (32a-f,42) aufweist, wobei jede der Vertiefungen (32a-f,42) jeweils ein Volumen und eine Tiefe (t) definiert, und
• das Dichtmaterial (25,45) derart auf die Trägerkomponente (31,41) aufgebracht ist, dass
□ das definierte Profil des Dichtmaterials (25,45) im Wesentlichen an dem äusseren Trägerbereich (41b) vorliegt und
□ ein Teil des Dichtmaterials (41') sich zumindest in einen Teil der Vertiefungen (32a-f,42) der Trägerkomponente (31,41) erstreckt und diese bezüglich Volumen und/oder Tiefe zu mindestens 50% ausfüllt.

12. Verfahren zur Herstellung eines zumindest zweikomponentigen Materialverbunds für zumindest eine Dichtfläche (22) eines Vakuumventils,'mit einem zumindest einen Teil eines Verschlusselements (20,20') oder eines Ventilsitzes (3) des Vakuumventils repräsentierenden und eine Trägerkomponente (31,41) für den zweikomponentigen Materialverbund bildenden, metallischen Materialrohteil, wobei eine Oberfläche des Materialrohteils einen inneren Trägerbereich (41a) von einem äusseren Trägerbereich (41b) trennt und definiert,
**dadurch gekennzeichnet, dass**
• eine Oberflächenbearbeitung des Materialrohteils derart erfolgt, dass eine Vielzahl sich in den inneren Trägerbereich (41a) erstreckender definierter Vertiefungen (32a-f,42) entlang der zu erzeugenden Dichtfläche erzeugt werden,
• das Materialrohteil und ein polymerbasiertes Dichtmaterial (25,45) in einem offenen Werkzeugzustand in ein Mehrfunktionswerkzeug eingebracht werden,
• in einem Verpress- und/oder Heizschritt mit Schliessen des Mehrfunktionswerkzeugs das Dichtmaterial (25,45) derart verformt und/oder verflüssigt wird, und insbesondere verpresst wird, dass ein Teil des Dichtmaterials (45') in die Vertiefungen (32a-f,42) des Materialrohteils gelangt und diese zumindest teilweise ausfüllt, und
• in einem Endschritt ein Normalisieren, insbesondere Abkühlen und/oder Entspannen, eines Zustands des Dichtmaterials (25,45) und/oder der Trägerkomponente (31,41) erfolgt,
insbesondere wobei
• vor Durchführung des Endschritts in einem Vulkanisationsschritt ein Vulkanisieren des Dichtmaterials (25,45) derart erfolgt, dass
∘ ein erster Teil des Dichtmaterials entlang eines Dichtflächenverlaufs mit einem definierten Profil auf dem äusseren Trägerbereich (41b) vulkanisiert vorliegt, und
∘ ein zweiter Teil des Dichtmaterials sich in die Vertiefungen (32a-f,42) des Materialrohteils erstreckend und die Vertiefungen (32a-f,42) mindestens zu 50% ausfüllend vulkanisiert vorliegt,
insbesondere wobei das Mehrfunktionswerkzeug während des Vulkanisationsschritts gemäss einer vorbestimmten Vernetzungskurve temperiert wird.

13. Verfahren nach Anspruch 12,
**dadurch gekennzeichnet, dass**
das Erzeugen der Vertiefungen (32a-f,42) durch zumindest eines der folgenden Mittel erfolgt:
• gepulstes Laserstrahlen,
• Fräsen,
• Ätzen,
• Bohren, und/oder
• Pressen.

14. Verfahren nach Anspruch 12 oder 13,
**dadurch gekennzeichnet, dass**
das Erzeugen einer der Vertiefungen (32a-f,42) dadurch erfolgt, dass ein fokussierter Laserstrahl auf eine bestimmte Position an der Oberfläche des Materialrohteils gerichtet wird, wobei die Laserstrahlung unter Beibehaltung der Ausrichtung auf die bestimmte Position mehrfach, insbesondere mindestens 10-mal oder mindestens 50-mal, und gepulst emittiert wird,

15. Verschlusselement (20,20') erhalten durch Ausführung eines Verfahrens nach einem der Ansprüche 12 bis 14, insbesondere wobei ein Verschlusselement (20,20') gemäss Anspruch 11 ausgebildet ist.

## Claims

1. Vacuum valve, in particular a vacuum control valve, for controlling a volume flow or mass flow and/or for interrupting a flow path in a gas-tight manner, comprising
• a valve seat (3) having
∘ a valve opening (2), which defines an opening axis (13), and
∘ a first sealing surface, which runs around the valve opening (2), and
• a closure element (20, 20') having a second sealing surface (22) which corresponds to the first sealing surface, in particular with regard to the course and dimension of the sealing surface,
wherein
• the first sealing surface and/or the second sealing surface (22) comprises an at least two-component material composite, and the material composite comprises a metal carrier component (31, 41) and a polymer-based sealing material (25, 45), and
• the sealing material (25, 45) is applied to the carrier component (31, 41) along a sealing surface course, in particular is vulcanized onto the latter, with a defined profile, in particular with a defined height in the direction of the surface normal of the carrier component,
**characterized in that**
• the metal carrier component (31, 41) defines an inner carrier region (41a) and an outer carrier region (41b),
• the metal carrier component (31, 41) has in the region of the respective sealing surface (3, 22) a plurality of defined depressions (32a-f, 42) extending into the inner carrier region (41a), wherein each of the depressions (32a-f, 42) respectively defines a volume and a depth (t), and
• the sealing material (25, 45) is applied to the carrier component (31, 41) such that
∘ the defined profile of the sealing material (25, 45) is present on the outer carrier region (41b) and
∘ a portion of the sealing material (41') extends at least into some of the depressions (32a-f, 42) of the carrier component (31, 41) and fills these to a proportion of at least 50% with regard to volume and/or depth,
in particular wherein the two-component material composite is produced by a method according to any one of claims 12 to 14.

2. Vacuum valve according to claim 1,
**characterized in that**
• a degree of filling, with regard to a filling of one of the depressions (32a-f, 42) or of a majority, in particular all, of the depressions (32a-f, 42) with the sealing material (41'), is on average at least 50%, in particular at least 75% or at least 90%,
and/or
• at least 50%, in particular at least 75% or at least 90%, of the volumes defined by the depressions (32a-f, 42) are filled with the sealing material to a proportion of at least 50%, in particular at least 75% or at least 90%.

3. Vacuum valve according to claim 1 or 2,
**characterized in that**
at least one of the depressions (32a-f, 42), in particular a majority or substantially all of the depressions, in the inner carrier region is shaped as
• a cylindrical recess (32a-b) of defined depth (t) which is bounded at one side, or
• a cylindrical recess of defined depth (t) which is bounded at one side and which has an end region (32c) that is enlarged in relation to the recess diameter, in particular an ellipsoidal end volume, in particular a depot volume, or
• a depression having an undercut (32e), or
• a conical or wedge-shaped depression (32f) having a width that decreases or increases as the depth increases.

4. Vacuum valve according to any one of claims 1 to 3,
**characterized in that**
at least one of the depressions (32a-f, 42), in particular a majority or substantially all of the depressions,
• has a depth (t) in the inner carrier region from a range between 200 µm and 500 µm, in particular from a range between 300 µm and 400 µm,
and/or
• has an internal diameter d, in particular at the surface thereof, from a range between 80 µm and 200 µm, in particular from a range between 100 µm and 130 µm,
and/or
• is shaped with a ratio of internal diameter d to depth t in the inner carrier region of d:t < 1:2, in particular of d:t < 1:3 or d:t < 1:4.

5. Vacuum valve according to any one of claims 1 to 4,
**characterized in that**
• an average depth (t) for the plurality of depressions (32a-f, 42) is in a range between 200 µm and 500 µm, in particular in a range between 300 µm and 400 µm, and/or
• an average internal diameter d for the plurality of depressions (32a-f, 42) is in a range between 80 µm and 200 µm, in particular in a range between 100 µm and 130 µm, and/or
• an average ratio of internal diameter d to depth t for the plurality of depressions (32a-f, 42) is d:t < 1:2, in particular d:t < 1:3 or d:t < 1:4.

6. Vacuum valve according to any one of claims 1 to 5,
**characterized in that**
• the adhesion of the sealing material to the carrier component is provided substantially by a mechanical engagement of the sealing material (25, 45) into the depressions (32a-f, 42),
and/or
• the material composite is provided in a manner free of adhesion promoter.

7. Vacuum valve according to any one of claims 1 to 6,
**characterized in that**
a spacing (a) between respective adjacent depressions (32a-f, 42), in particular from centre point to centre point, is 100 µm < a < 250 µm.

8. Vacuum valve according to any one of claims 1 to 7,
**characterized in that**
at least one of the depressions (32a-f, 42), in particular the entire plurality of the depressions, extends along the sealing surface, in particular concentrically in relation to the valve opening.

9. Vacuum valve according to any one of claims 1 to 8,
**characterized in that**
• respective adjacent depressions (32a-f, 42) are arranged substantially parallel with regard to the orientations thereof, or
• the depressions (32a-f, 42) are deliberately arranged chaotically with regard to the orientation thereof.

10. Vacuum valve according to any one of claims 1 to 9,
**characterized in that**
a volume of one depression (32a-f, 42), in particular of all depressions or an average value for the volume, is defined such that the volume is greater than a volume in the depression (32a-f, 42) that is taken up by the volume of the in particular vulcanized sealing material, in particular is greater such that an enlargement of the spatial size of the sealing material (25, 45) in the depression (32a-f, 42), which occurs during vulcanization, can be accommodated.

11. Closure element (20, 20'), in particular a valve plate, for a vacuum valve and designed to control a volume flow or mass flow and/or to close off a process volume in a gas-tight manner by interacting with a vacuum valve opening (2) of the vacuum valve that is provided for the process volume, having a second sealing surface (22) which corresponds to a first sealing surface of the valve opening, in particular with regard to shape and size, wherein the first sealing surface runs around the vacuum valve opening (2), wherein
• the second sealing surface (22) comprises a two-component material composite and the material composite comprises a metal carrier component (31, 41) and a polymer-based sealing material (25, 45), and
• the sealing material (25, 45) is applied to the carrier component (31, 41) along a sealing surface course, in particular is vulcanized onto the latter, with a defined profile, in particular with a defined height in the direction of the surface normal of the carrier component,
**characterized in that**
• the metal carrier component (31, 41) defines an inner carrier region (41a) and an outer carrier region (41b),
• the metal carrier component (31, 41) has in the region of the respective sealing surface (3, 22) a plurality of defined depressions (32a-f, 42) extending into the inner carrier region (41a), wherein each of the depressions (32a-f, 42) respectively defines a volume and a depth (t), and
• the sealing material (25, 45) is applied to the carrier component (31, 41) such that
∘ the defined profile of the sealing material (25, 45) is present substantially on the outer carrier region (41b) and
∘ a portion of the sealing material (41') extends at least into some of the depressions (32a-f, 42) of the carrier component (31, 41) and fills these to a proportion of at least 50% with regard to volume and/or depth.

12. Method for producing an at least two-component material composite for at least one sealing surface (22) of a vacuum valve, using a metal material blank which represents at least a portion of a closure element (20, 20') or of a valve seat (3) of the vacuum valve and which forms a carrier component (31, 41) for the two-component material composite, wherein a surface of the material blank separates and defines an inner carrier region (41a) from an outer carrier region (41b),
**characterized in that**
• a surface machining of the material blank takes place such that a plurality of defined depressions (32a-f, 42) extending into the inner carrier region (41a) are created along the sealing surface that is to be produced,
• the material blank and a polymer-based sealing material (25, 45) are introduced into a multifunction mould in an open tool state of the mould,
• in a compression and/or heating step with closure of the multifunction mould, the sealing material (25, 45) is deformed and/or liquefied, and in particular is compressed, such that a portion of the sealing material (45') enters the depressions (32a-f, 42) of the material blank and at least partially fills said depressions, and
• in a final step, a state of the sealing material (25, 45) and/or of the carrier component (31, 41) is normalized, in particular is cooled and/or relieved of load,
in particular wherein
• before the final step is carried out, a vulcanization of the sealing material (25, 45) takes place in a vulcanization step such that
∘ a first portion of the sealing material along a sealing surface course is present in vulcanized form with a defined profile on the outer carrier region (41b), and
∘ a second portion of the sealing material is present in vulcanized form in a manner extending into the depressions (32a-f, 42) of the material blank and filling the depressions (32a-f, 42) to a proportion of at least 50%,
in particular wherein the multifunction mould is temperature-controlled according to a predetermined crosslinking curve during the vulcanization step.

13. Method according to claim 12,
**characterized in that**
the depressions (32a-f, 42) are created by at least one of the following means:
• pulsed laser beams,
• milling,
• etching,
• drilling, and/or
• pressing.

14. Method according to claim 12 or 13,
**characterized in that**
one of the depressions (32a-f, 42) is created by directing a focused laser beam onto a particular position on the surface of the material blank, wherein the laser radiation is emitted multiple times, in particular at least 10 times or at least 50 times, and in pulsed form, while maintaining the orientation onto the particular position.

15. Closure element (20, 20') obtained by carrying out a method according to any one of claims 12 to 14, in particular wherein a closure element (20, 20') according to claim 11 is formed.

## Revendications

1. Soupape à vide, en particulier soupape à vide de régulation, pour la régulation d'un débit volumétrique ou massique et/ou pour la fermeture étanche aux gaz d'un trajet d'écoulement, avec
• un siège de soupape (3) qui présente
∘ une ouverture de soupape (2) définissant un axe d'ouverture (13) et
∘ une première surface d'étanchéité entourant l'ouverture de soupape (2), et
• un élément de fermeture (20, 20') avec une deuxième surface d'étanchéité (22) correspondant à la première surface d'étanchéité, en particulier par la forme et la dimension de la surface d'étanchéité,
dans laquelle
• la première surface d'étanchéité et/ou la deuxième surface d'étanchéité (22) présentent un assemblage de matériaux à deux composants au moins et l'assemblage de matériaux comporte une composante métallique portante (31, 41) et un matériau d'étanchéité à base de polymère (25, 45), et
• le matériau d'étanchéité (25, 45) est appliqué sur la composante portante (31, 41) le long d'un contour de la surface d'étanchéité, en particulier vulcanisé dessus, selon un profil défini, en particulier une hauteur définie dans la direction de la perpendiculaire à la surface de la composante portante,
**caractérisée en ce que**
• la composante métallique portante (31, 41) définit une zone portante intérieure (41a) et une zone portante extérieure (41b),
• la composante métallique portante (31, 41) comporte, dans la zone de la surface d'étanchéité correspondante (3, 22), plusieurs renfoncements (32a-f, 42) définis qui s'étendent dans la zone portante intérieure (41a), chacun des renfoncements (32a-f, 42) définissant un volume et une profondeur (t), et
• le matériau d'étanchéité (25, 45) est appliqué sur la composante portante (31,41) de telle manière que
∘ le profil défini du matériau d'étanchéité (25, 45) se trouve sur la zone portante extérieure (41b) et
∘ une partie du matériau d'étanchéité (41') s'étend au moins dans une partie des renfoncements (32a-f, 42) de la composante portante (31,41) et remplit ceux-ci au moins à 50 % du volume et/ou de la profondeur,
l'assemblage de matériaux étant fabriqué en particulier par un procédé selon l'une des revendications 12 à 14.

2. Soupape à vide selon la revendication 1, **caractérisée en ce que**
• un taux de remplissage de l'un des renfoncements (32a-f, 42) ou de plusieurs des renfoncements (32a-f, 42), en particulier tous, avec le matériau d'étanchéité (41') représente en moyenne au moins 50 %, en particulier au moins 75 % ou au moins 90%
et/ou
• au moins 50 %, en particulier au moins 75 % ou au moins 90 % des volumes définis par les renfoncements (32a-f, 42) sont remplis à au moins 50 %, en particulier au moins 75 % ou au moins 90 %, avec le matériau d'étanchéité.

3. Soupape à vide selon la revendication 1 ou 2, **caractérisée en ce qu'**au moins un des renfoncements (32a-f, 42), en particulier une majorité des renfoncements ou sensiblement tous, sont formés dans la zone portante intérieure sous la forme
• d'un évidement cylindrique délimité d'un côté (32a-b) ayant une profondeur (t) définie ou
• d'un évidement cylindrique délimité d'un côté ayant une profondeur (t) définie avec une partie d'extrémité (32c) agrandie par rapport au diamètre de l'évidement, en particulier avec des volumes d'extrémités ellipsoïdaux, en particulier des volumes de dépôt, ou
• d'un renfoncement avec une contre-dépouille (32e) ou
• d'un renfoncement conique ou en forme de coin (32f) dont la largeur diminue ou augmente avec la profondeur.

4. Soupape à vide selon l'une des revendications 1 à 3, **caractérisée en ce qu'**au moins un des renfoncements (32a-f, 42), en particulier une majorité des renfoncements ou sensiblement tous,
• présentent une profondeur (t) dans la zone portante intérieure comprise entre 200 µm et 500 µm, en particulier entre 300 µm et 400 µm,
et/ou
• présentent un diamètre intérieur *d,* en particulier à leur surface, compris entre 80 µm et 200 µm, en particulier entre 100 µm et 130 µm,
et/ou
• sont formés avec un rapport entre le diamètre intérieur d et la profondeur t dans la zone portante intérieure de *d*:t < 1:2, en particulier de *d*:t < 1:3 ou de *d*:t < 14.

5. Soupape à vide selon l'une des revendications 1 à 4, **caractérisée en ce que**
• une profondeur moyenne (t) du grand nombre de renfoncements (32a-f, 42) est comprise entre 200 µm et 500 µm, en particulier entre 300 µm et 400 µm,
• un diamètre intérieur moyen d du grand nombre de renfoncements (32a-f, 42) est compris entre 80 µm et 200 µm, en particulier entre 100 µm et 130 µm, et/ou
• un rapport moyen entre le diamètre intérieur *d* et la profondeur t pour le grand nombre de renfoncements (32a-f, 42) est de *d*:t < 1:2, en particulier de *d*:t < 1:3 ou de *d*:t < 1 :4.

6. Soupape à vide selon l'une des revendications 1 à 5, **caractérisée en ce que**
• l'adhérence du matériau d'étanchéité à la composante portante est créée pour l'essentiel par un agrippement mécanique du matériau d'étanchéité (25, 45) dans les renfoncements (32a-f, 42),
et/ou
• l'assemblage de matériaux est réalisé sans renforçateur d'adhérence.

7. Soupape à vide selon l'une des revendications 1 à 6, **caractérisée en ce qu'**une distance (a) entre des renfoncements (32a-f, 42) voisins, en particulier de centre à centre, est de 100 µm < a < 250 µm.

8. Soupape à vide selon l'une des revendications 1 à 7, **caractérisée en ce qu'**au moins un des renfoncements (32a-f, 42), en particulier tout le grand nombre de renfoncements, s'étend le long de la surface d'étanchéité, en particulier de façon concentrique par rapport à l'ouverture de soupape.

9. Soupape à vide selon l'une des revendications 1 à 8, **caractérisée en ce que**
• des renfoncements (32a-f, 42) voisins sont disposés selon une orientation sensiblement parallèle ou
• les renfoncements (32a-f, 42) sont disposés selon une orientation volontairement désordonnée.

10. Soupape à vide selon l'une des revendications 1 à 9, **caractérisée en ce qu'**un volume d'un renfoncement (32a-f, 42), en particulier de tous les renfoncements, ou une moyenne des volumes sont définis de telle façon que le volume soit plus grand qu'un volume occupé par le volume du matériau d'étanchéité, en particulier vulcanisé, dans le renfoncement (32a-f, 42), en particulier soit plus grand de telle manière qu'une augmentation de l'étendue spatiale du matériau d'étanchéité (25, 45) qui se produit pendant la vulcanisation puisse se loger dans le renfoncement (32a-f, 42).

11. Élément de fermeture (20, 20'), en particulier disque de soupape, pour une soupape à vide, pour la régulation d'un débit volumétrique ou massique et/ou pour la fermeture étanche aux gaz d'un volume de process au moyen de la coopération avec une ouverture de soupape à vide (2) de la soupape à vide prévue pour le volume de process, avec une deuxième surface d'étanchéité (22) correspondant à la première surface d'étanchéité de l'ouverture de soupape, en particulier par sa forme et sa dimension, dans lequel
• la deuxième surface d'étanchéité (22) présente un assemblage de matériaux à deux composants au moins et l'assemblage de matériaux comporte une composante métallique portante (31, 41) et un matériau d'étanchéité (25, 45) à base de polymère, et
• le matériau d'étanchéité (25, 45) est appliqué sur la composante portante (31, 41) le long d'un contour de la surface d'étanchéité, en particulier vulcanisé dessus, selon un profil défini, en particulier une hauteur définie dans la direction de la perpendiculaire à la surface de la composante portante,
**caractérisé en ce que**
• la composante métallique portante (31, 41) définit une zone portante intérieure (41a) et une zone portante extérieure (41b),
• la composante métallique portante (31, 41) comporte, dans la zone de la surface d'étanchéité correspondante (3, 22), plusieurs renfoncements (32a-f, 42) qui s'étendent dans la zone portante intérieure (41a), chacun des renfoncements (32a-f, 42) définissant un volume et une profondeur (t), et
• le matériau d'étanchéité (25, 45) est appliqué sur la composante portante (31,41) de telle manière que
∘ le profil défini du matériau d'étanchéité (25, 45) se trouve sur la zone portante extérieure (41b) et
∘ une partie du matériau d'étanchéité (41') s'étend au moins dans une partie des renfoncements (32a-f, 42) de la composante portante (31,41) et remplit ceux-ci au moins à 50 % du volume et/ou de la profondeur,

12. Procédé pour la fabrication d'un assemblage de matériaux à deux composants au moins pour au moins une surface d'étanchéité (22) d'une soupape à vide, avec une pièce brute de matériau métallique représentant au moins une partie d'un élément de fermeture (20, 20') ou d'un siège de soupape (3) de la soupape à vide et formant une composante portante (31, 41) de l'assemblage de matériaux à deux composants, une surface de la pièce brute de matériau séparant une zone portante intérieure (41a) d'une zone portante extérieure (41b) et les définissant, **caractérisé en ce que**
• la pièce brute de matériau est soumise à un traitement de surface de manière à former un grand nombre de renfoncements (32a-f, 42) définis qui s'étendent dans la zone portante intérieure (41a) le long de la surface portante à créer,
• la pièce brute de matériau et un matériau d'étanchéité à base de polymère (25, 45) sont introduits dans un outil multifonction lorsque l'outil est ouvert,
• au cours d'une étape de pressage et/ou de chauffage avec fermeture de l'outil multifonction, le matériau d'étanchéité (25, 45) est déformé et/ou liquéfié, en particulier compressé, de telle façon qu'une partie du matériau d'étanchéité (45') parvienne dans les renfoncements (32a-f, 42) de la pièce brute de matériau et les remplissent au moins en partie, et
• dans une étape finale, un état du matériau d'étanchéité (25, 45) et/ou de la composante portante (31, 41) est normalisé, en particulier par refroidissement et/ou détensionnement,
tandis que, en particulier,
• le matériau d'étanchéité (25, 45) est vulcanisé avant l'étape finale au cours d'une étape de vulcanisation, de telle manière
∘ qu'une première partie du matériau d'étanchéité soit vulcanisée avec un profil défini le long d'un contour de surface d'étanchéité sur la zone portante extérieure (41b) et
∘ qu'une deuxième partie du matériau d'étanchéité s'étende dans les renfoncements (32a-f, 42) de la pièce brute de matériau et remplisse les renfoncements (32a-f, 42) au moins à 50 %,
l'outil multifonction étant en particulier amené à température pendant l'étape de vulcanisation suivant une courbe de polymérisation prédéterminée.

13. Procédé selon la revendication 12, **caractérisé en ce que** la création des renfoncements (32a-f, 42) est réalisée par au moins un des moyens suivants :
• faisceau laser pulsé,
• fraisage,
• attaque chimique,
• perçage et/ou
• pressage.

14. Procédé selon la revendication 12 ou 13, **caractérisé en ce qu'**un des renfoncements (32a-f, 42) est créé en dirigeant un faisceau laser focalisé sur une position donnée à la surface de la pièce brute de matériau, le rayonnement laser étant émis plusieurs fois, en particulier au moins 10 fois ou au moins 50 fois, vers la position donnée en conservant son orientation et de manière puisée.

15. Élément de fermeture (20, 20') obtenu par l'exécution d'un procédé selon l'une des revendications 12 à 14, dans lequel, en particulier, un élément de fermeture (20, 20') selon la revendication 11 est formé.
